# EUROPÄISCHE PATENTANMELDUNG

(11) **EP 2 025 978 A2**
(43) Veröffentlichungstag der Anmeldung: **18.02.2009**
(21) Anmeldenummer: 08158465.8
(22) Anmeldetag: 18.06.2008
(51) Int. Cl.: F16K 3/26, F16K 31/122

(54) **Wegeventil für eine Scheibenreinigungsvorrichtung in einem Kraftfahrzeug**

(30) Priorität: 17.08.2007 DE 202007011587 U
(71) Anmelder: MANN+HUMMEL GmbH, 71638 Ludwigsburg (DE)
(72) Erfinder: Meier, Dirk, 37581, Bad Gandersheim (DE); Dierks, Gerold, 26125, Oldenburg (DE)

(57) **Zusammenfassung**

Ein Wegeventil (17) für eine Scheibenreinigungsvorrichtung in einem Kraftfahrzeug weist in einem Ventilgehäuse einen verschiebbaren Steuerkolben (19) auf, der von einem Federelement (18) in eine Schließposition beaufschlagt und durch Druckeinleitung gegen die Schließkraft des Federelements in Öffnungsstellung zu versetzen ist. Die Einströmöffnung (22) zum Druckraum (21) ist in Schließposition von einem Verschlusspfropfen (23) verschlossen, der eine kleinere Fläche aufweist als die den Druckraum (21) begrenzendes Stirnseite des Steuerkolbens (19).

## Beschreibung

### Technisches Gebiet

Die Erfindung bezieht sich auf ein Wegeventil für eine Scheibenreinigungsvorrichtung in einem Kraftfahrzeug nach dem Oberbegriff des Anspruches 1.

### Stand der Technik

In der DE 196 00 360 A1 wird eine Scheibenreinigungsvorrichtung für ein Kraftfahrzeug beschrieben, bei der Fluid mithilfe einer Pumpe aus einem Waschflüssigkeitsbehälter zu einem Ventil gefördert wird, welches zeitabhängig zwischen verschiedenen Auslässen umschaltet, die unterschiedlichen Spritzdüsen zugeordnet sind. Das von der Pumpe geförderte Fluid wird in einen Druckraum in dem Ventil eingeleitet, in welchem ein Steuerkolben axial gegen die Kraft eines Federelementes verschieblich gelagert ist, und gleichzeitig in einen Sammelraum geführt, der über eine verschiebliche Strömungsöffnung mit mehreren Auslasskanälen kommuniziert. Die verschiebliche Strömungsöffnung ist in eine Kolbenstange eingebracht, die mit dem Steuerkolben verbunden ist und die gleiche Verschiebebewegung wie der Steuerkolben ausführt. Wenn sich der Druckraum mit Fluid füllt und dementsprechend der Steuerkolben gegen die Kraft des Federelementes verschoben wird, überstreicht die Strömungsöffnung in der Kolbenstange nacheinander die verschiedenen Auslasskanäle, so dass die Auslasskanäle zeitlich aufeinander folgend geöffnet und wieder geschlossen werden.

In dieser Ausführung können die Strömungskanäle nur in der vorgegebenen Reihenfolge zeitlich versetzt mit Fluid befüllt werden. Es ist aber nicht möglich, die Strömungskanäle praktisch ohne Zeitverlust direkt anzusteuern.

### Offenbarung der Erfindung

Der Erfindung liegt die Aufgabe zugrunde, mit einfachen konstruktiven Maßnahmen ein Wegeventil für eine Scheibenreinigungsvorrichtung in einem Kraftfahrzeug zu schaffen, das sich durch kurze Schaltzeiten und eine gezielte Ansteuerung des Strömungskanals auszeichnet.

Diese Aufgabe wird erfindungsgemäß mit den Merkmalen des Anspruches 1 gelöst. Die Unteransprüche geben zweckmäßige Weiterbildungen an.

Das erfindungsgemäße Wegeventil für eine Scheibenreinigungsvorrichtung in einem Kraftfahrzeug weist in einem Ventilgehäuse einen verschiebbaren Steuerkolben auf, der von einem Federelement in eine einen Strömungskanal verschließende Schließposition beaufschlagt ist. Eine Stirnseite des Steuerkolbens begrenzt im Ventilgehäuse einen Druckraum, in den über eine Einströmöffnung Fluid einführbar ist, welches den Steuerkolben gegen die Kraft des auf ihn wirkenden Federelementes aus der Schließposition in die Öffnungsposition verschiebt.

Des Weiteren ist vorgesehen, dass die Einströmöffnung zum Druckraum in der Schließposition des Steuerkolbens von einem Verschlusspfropfen verschlossen ist, der eine kleinere Fläche aufweist als die den Druckraum begrenzende Stirnseite des Steuerkolbens. Diese Ausführung eröffnet die Möglichkeit, über den Flächenunterschied von Verschlusspfropfen und Kolbenstirnseite eine Kraftverstärkung zu erzielen, die zu einem schnellen Verschieben des Steuerkolbens und damit einhergehend einer schnellen Öffnung des Strömungskanals führt. Der an der Einströmöffnung zum Druckraum anliegende Fluiddruck wirkt gegen den Verschlusspfropfen, der erst mit Überschreiten eines Grenzdrucks sich aus der Einströmöffnung löst und diese frei gibt. Unmittelbar nach der Freigabe der Einströmöffnung kann das Fluid in den Druckraum einfließen und beaufschlagt die Stirnseite des Kolbens mit dem gleichen Druck, der jedoch aufgrund der größeren Fläche der Kolbenstirnseite zu einer entsprechend größeren Stellkraft führt, so dass der Kolben unverzüglich gegen die Kraft des auf ihn wirkenden Federelementes in Richtung Öffnungsposition verstellt wird. Man erhält hierdurch ein sehr schnell und ohne nennenswerte Zeitverzögerung zwischen Schließ- und Öffnungsposition zu schaltendes Ventil.

Vorteilhafterweise ist das Wegeventil in der Weise ausgelegt, dass es lediglich eine Öffnungsposition oder die Schließposition einnimmt, jedoch keine Zwischenpositionen. In der Öffnungsposition ist der mindestens eine Strömungskanal im Wegeventil frei gegeben, in der Schließposition verschlossen. Die Überführung zwischen der Schließ- und der Öffnungsposition erfolgt gegen die Kraft des Federelementes, wobei verhältnismäßig klein dimensionierte Federelemente verwendet werden können, um einen möglichst schnellen Öffnungsvorgang durchführen zu können. Die Verwendung von Federelementen mit kleinen Federraten ist möglich, da über den Verschlusspfropfen kleinerer Fläche ein verhältnismäßig hoher Grenz- bzw. Schaltdruck einstellbar ist, der erreicht werden muss, damit der Pfropfen sich aus der Einströmöffnung löst und der Druckraum mit dem Fluid befüllt werden kann. Die Druckdifferenz, die zwischen dem Grenz- bzw. Schaltdruck zum Lösen des Verschlusspfropfens und dem für die Verschiebung des Steuerkolbens erforderlichen Druck liegt, sorgt für eine rasche Verstellung des Steuerkolbens aus der Schließ- in die Öffnungsposition.

Gemäß einer zweckmäßigen Ausführung ist der Verschlusspfropfen fest am Steuerkolben angeordnet, insbesondere an der den Druckraum begrenzenden Stirnseite des Steuerkolbens, wobei ggf. Steuerkolben und Verschlusspfropfen ein gemeinsames, einteiliges Bauteil bilden, was sich konstruktiv einfach realisieren lässt. Bei stirnseitiger Positionierung des Verschlusspfropfens befindet sich die Einströmöffnung vorteilhafterweise auf der der Stirnseite des Steuerkolbens zugewandten Wandseite des Ventilgehäuses, derart, dass bei geschlossenem Steuerkolben der Verschlusspfropfen in die Einströmöffnung einragt und diese verschließt. Wird über das Steuerfluid die Stirnseite des Verschlusspfropfens mit dem erforderlichen Druck beaufschlagt, so wird der Verschlusspfropfen und damit auch der Steuerkolben verschoben und es wird die Einströmöffnung frei gegeben, so dass sich der Druckraum mit dem Steuerfluid füllt und die Stirnseite des Steuerkolbens mit dem Steuerfluid beaufschlagt wird.

In bevorzugter Weiterbildung ist das Ventil als Mehrwegeventil mit mindestens zwei Strömungskanälen ausgebildet, die von dem Steuerkolben zu schließen bzw. zu öffnen sind. Dies kann in der Weise erfolgen, dass beide Strömungskanäle gleichzeitig geöffnet werden und in Schließposition des Steuerkolbens jeweils geschlossen sind. Bei gleichzeitiger Öffnung der mindestens zwei Strömungskanäle erfolgt die separate Ansteuerung der Strömungskanäle vorteilhafterweise über eine Drehrichtungsumkehr einer elektrischen Pumpe, die Bestandteil der Scheibenreinigungsvorrichtung ist. Je nach Drehrichtung der Pumpe wird entweder der eine oder der andere Strömungskanal im Wegeventil angesteuert.

Grundsätzlich ist es auch möglich, mehr als zwei Strömungskanäle im Wegeventil vorzusehen, wobei bevorzugt die Strömungskanäle zu zwei Gruppen zusammengefasst sind und jede Gruppe von Strömungskanälen bei einer bestimmten Drehrichtung der elektrischen Pumpe mit Fluid beaufschlagt wird.

Gemäß noch einer weiteren vorteilhaften Ausführung ist das von der Pumpe geförderte Fluid sowohl dem Druckraum im Ventilgehäuse als auch dem mindestens einen Strömungskanal zuführbar. In dieser Ausführung ist das den Steuerkolben verstellende Steuerfluid identisch mit dem Reinigungsfluid, das aus einem Reservoir entnommen wird. Stromab der Pumpe verzweigen Förder- bzw. Fluidleitungen zum einen in den Steuerraum und zum anderen in den mindestens einen Strömungskanal, der von dem Steuerkolben zu öffnen bzw. zu sperren ist. Sind zwei oder mehr Strömungskanäle vorgesehen, sind auch eine entsprechende Anzahl an Fluidleitungen zu den Strömungskanälen erforderlich, von den jedoch jeweils eine Steuerleitung zu der Einströmöffnung verzweigt, die in den Druckraum mündet.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenreinigungsvorrichtung in einem Kraftfahrzeug mit einer Mehrzahl von Fluidaustrittsdüsen, die über eine gemeinsame, elektrisch betätigbare Pumpe mit Hydraulikfluid versorgt werden, wobei zur Verteilung des Fluids auf zwei der Düsen ein Mehrwegeventil vorgesehen ist,
- Fig. 2: das Ventil in einer Ausführung als 4/2-Wegeventil im Schnitt, dargestellt in der Schließposition, in der ein Steuerkolben im Ventilgehäuse den Strömungsweg durch zwei Strömungskanäle versperrt,
- Fig. 3: das Ventil mit dem Steuerkolben in Öffnungsposition,
- Fig. 4: das Ventil in einer Variante mit einem Entlastungskanal auf der dem Druckraum gegenüberliegenden Seite des Steuerkolbens.

In den Figuren sind gleiche Bauteile mit gleichen Bezugszeichen versehen.

### Ausführungsformen der Erfindung

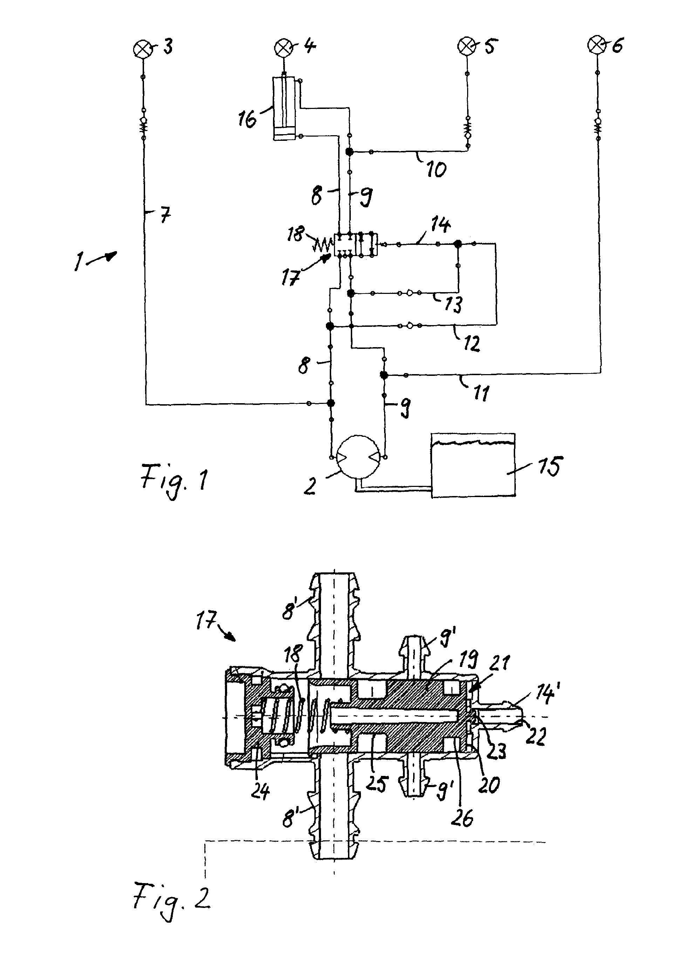

In Fig. 1 ist eine Scheibenreinigungsvorrichtung 1 für ein Kraftfahrzeug dargestellt, über die die Windschutzscheibe, die Heckscheibe und/oder Streuglasscheiben an Fahrzeugscheinwerfern zu reinigen sind. Die Scheibenreinigungsvorrichtung umfasst eine elektrische Pumpe 2, deren Drehrichtung umkehrbar ist und die Fluid aus einem Vorratsbehälter 15 zu Fluidaustrittsdüsen 3, 4, 5 und 6 fördert. Die Pumpe 2 ist über Fluidleitungen 7 bis 10 mit den Fluidaustrittsdüsen 3 verbunden. Im Strömungsweg zwischen der Pumpe 2 und den Fluidaustrittsdüsen 4 und 5 befindet sich ein schaltbares 4/2-Wegeventil 17, über das die Fluidleitungen 8 und 9 gesperrt bzw. frei geschaltet werden können. Stromauf des Wegeventils 17 zweigt von der Fluidleitung 9 eine weitere Fluidleitung 11 zur Fluidaustrittsdüse 6 ab. Stromab des Wegeventils 17 zweigt von der Fluidleitung 9 eine weitere Fluidleitung 10 ab, die zu der Fluidaustrittsdüse 5 geführt ist.

Das Wegeventil 17 wird über ebenfalls aus dem Vorratsbehälter 15 entnommenes Fluid zwischen Schließ- und Öffnungsposition geschaltet, wobei in der Schließposition die beiden Fluidleitungen 8 und 9 geschlossen und in der Öffnungsposition die beiden Fluidleitungen 8 und 9 geöffnet sind. Welche der beiden Fluidleitungen 8 bzw. 9 mit Fluid von der Pumpe 2 versorgt werden, hängt von der Drehrichtung der Pumpe ab. Um das Wegeventil 17 zu schalten, zweigen von den Fluidleitungen 8 und 9 weitere Fluidleitungen 12 bzw. 13 ab, die in einen gemeinsamen Leitungsabschnitt 14 münden, der zum Stellorgan des Wegeventils 17 geführt ist. Übersteigt der von der Pumpe 2 geförderte Fluiddruck einen Grenz- bzw. Schaltdruck, wird das Steuerorgan im Wegeventil 17, das von einem Federelement 18 in seine Schließposition kraftbeaufschlagt ist, in die Öffnungsposition verstellt. Fällt der Druck unter einen weiteren Schaltdruck ab, der vorteilhafterweise unterhalb des für die Öffnung zuständigen Schaltdruckes liegt, wird das Steuerorgan im Schaltventil 17 durch die Kraft des Federelementes 18 wieder in die Schließposition verstellt, so dass auch der Strömungsweg durch die Fluidleitungen 8 und 9 gesperrt ist.

Der Fluidaustrittsdüse 4 ist ein weiteres Ventil 16 zugeordnet, welches sich stromab des Wegeventils 17 befindet und an verschiedenen Stellen von den Fluidleitungen 8 und 9 mit Fluid versorgt wird. Die Fluidleitungen 8 und 9 münden diesseits und jenseits eines Hubkolbens in das Gehäuse des Ventils 16, wobei je nach Zufuhr von Fluid entweder über die Leitung 8 oder die Leitung 9 der Hubkolben ausgefahren bzw. zurückverstellt wird. In der ausgefahrenen Position des Hubkolbens tritt automatisch Fluid über die Düse 4 aus.

In Fig. 2 ist das Wegeventil 17 im Schnitt in seiner Schließposition dargestellt. Ein im Ventilgehäuse verschieblich gelagerter Steuerkolben 19, der die Funktion des Steuerorgans übernimmt, steht in Schließstellung, in der Strömungskanäle 8' und 9', die den Fluidleitungen 8 und 9 (Fig. 1) zugeordnet sind, von der Wandung des Steuerkolbens 19 verschlossen sind. Eine Stirnseite 20 des Steuerkolbens 19 begrenzt einen Druckraum 21 im Ventilgehäuse, der mit einer Einströmöffnung 22 in einem Stutzen 14' kommuniziert, welcher von der Fluidleitung 14 (Fig. 1) mit Steuerfluid versorgt wird. An der den Druckraum 21 begrenzenden Stirnseite 20 des Steuerkolbens 19 ist zentral ein Verschlusspfropfen 23 angeordnet, der eine kleinere Stirnfläche als die Stirnseite 20 des Steuerkolbens aufweist und in die Strömungsöffnung 22 im Ventilgehäuse einragt und diese verschließt.

Auf der dem Druckraum 21 gegenüberliegenden Seite wird der Steuerkolben 19 von dem Federelement 18 in die Schließposition kraftbeaufschlagt. Das Federelement 18 stützt sich an einem Stopfen 24 ab, der fest im Ventilgehäuse angeordnet ist. Die Strömungskanäle 8' und 9' münden radial in das Ventilgehäuse bzw. verzweigen radial von diesem, wohingegen der Strömungsstutzen 14 axial einmündet.

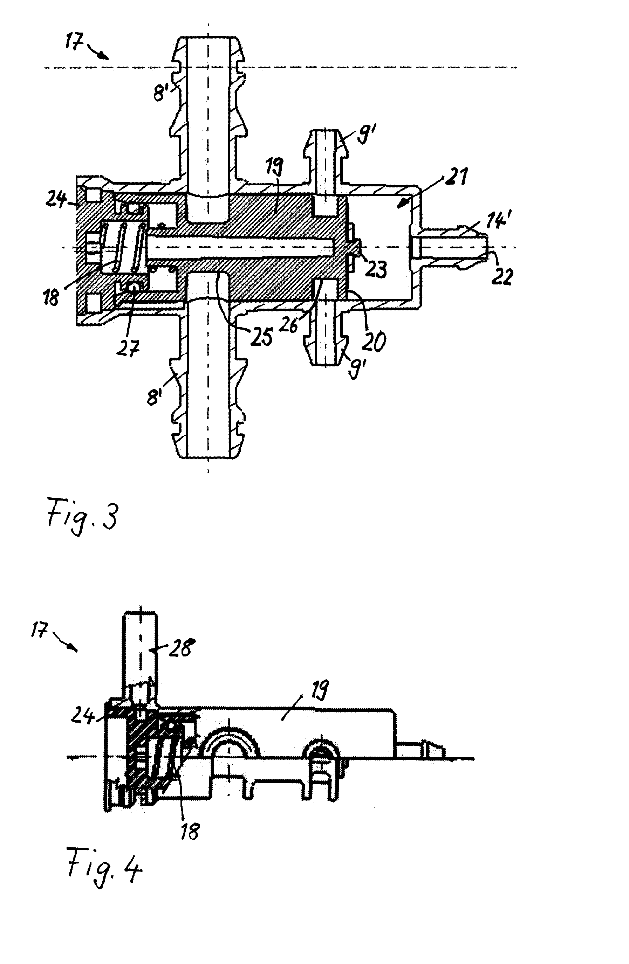

In Fig. 3 ist das Wegeventil 17 in der Öffnungsposition dargestellt. Sobald das über den Stutzen 14' und über die Einströmöffnung 22 herangeführte Steuerfluid den Steuer- bzw. Grenzdruck übersteigt, der von der Kraft des Federelementes 18 einerseits und der Stirnfläche des Verschlusspfropfens 23 andererseits bestimmt wird, wird der Verschlusspfropfen 23 aus einer die Einströmöffnung 22 verschließenden Position herausgedrückt, woraufhin das unter Druck stehende Steuerfluid in den Druckraum 21 einströmt und die Stirnseite 20 des Steuerkolbens 19 beaufschlagt. Aufgrund der erheblich größeren Stirnfläche der Stirnseite 20 des Steuerkolbens im Vergleich zur Stirnfläche des Verschlusspfropfens 23 wird eine entsprechend Kraftverstärkung erzielt, woraufhin der Steuerkolben 19 schlagartig gegen die Kraft des Federelementes 18 aus der Schließ- in die Öffnungsposition verstellt wird, in der Verbindungskanäle 25 und 26, die in den Steuerkolben eingebracht sind und sich in Umfangsrichtung oder radial erstrecken, die herangeführten bzw. abzweigenden Abschnitte 8' bzw. 9' der Strömungskanäle miteinander verbinden.

Der Steuerkolben wird durch das Federelement 18 wieder in seine Schließposition zurück verstellt, sobald der Druck im Druckraum 21 unter einen Schalt- bzw. Grenzdruck abfällt, der von der Federkraft des Federelementes 18 einerseits und der Stirnfläche der Stirnseite 20 andererseits bestimmt ist.

An der äußeren Mantelfläche des Stopfens 24 ist ein Dichtring 27 angeordnet, der in der Öffnungsposition von einem dem Druckraum 21 axial gegenüberliegenden, hülsenförmigen Abschnitt des Steuerkolbens 19 radial übergriffen ist. Der Dichtring 27 drückt die äußere Mantelfläche des Steuerkolbens 19 gegen die Innenwand des Ventilgehäuses, wodurch Fehlströme zwischen den Strömungskanälen 8' und 9' und der Umgebung, die durch Spaltmaße zwischen dem Steuerkolben und dem Gehäuse entstehen können, verhindert werden.

In Fig. 4 ist eine Variante des Wegeventils 17 dargestellt, bei der ein Entlüftungskanal 28 in dem dem Stopfen 24 benachbarten Bereich vorgesehen ist, bei der der Entlüftungskanal 28 mit dem Raum im Ventilgehäuse kommuniziert, der von dem Stopfen 24 einerseits und der zugewandten Stirnseite des Steuerkolbens andererseits begrenzt ist. Dieser Raum ist in der Öffnungsstellung des Steuerkolbens 19 reduziert, entsprechend werden in diesem Raum enthaltene Gase komprimiert, die nunmehr über den Entlüftungskanal 28 abgeleitet werden können. Vorteilhafterweise ist der Entlüftungskanal 28 mit dem Vorratsbehälter 15 (Fig. 1) für das Fluid verbunden.

## Patentansprüche

1. Wegeventil für eine Scheibenreinigungsvorrichtung in einem Kraftfahrzeug, das in einem Ventilgehäuse einen verschiebbaren Steuerkolben (19) aufweist, der von einem Federelement (18) in eine einen Strömungskanal (8', 9') verschließende Schließposition beaufschlagt ist und der durch Druckbeaufschlagung mit Fluid gegen die Schließkraft des Federelements (18) in Öffnungsstellung zu versetzen ist, in der der Strömungskanal (8', 9') geöffnet ist, wobei das Fluid über eine Einströmöffnung (22) im Ventilgehäuse in einen Druckraum (21) einzuführen ist, der von einer Stirnseite (20) des Steuerkolbens (19) begrenzt ist, **dadurch gekennzeichnet, dass** die Einströmöffnung (22) zum Druckraum (21) in Schließposition des Steuerkolbens (19) von einem Verschlusspfropfen (23) verschlossen ist, der eine kleinere Fläche aufweist als die den Druckraum (21) begrenzende Stirnseite (20) des Steuerkolbens (19).

2. Wegeventil nach Anspruch 1, **dadurch gekennzeichnet, dass** der Verschlusspfropfen (23) am Steuerkolben (19) fest angeordnet ist.

3. Wegeventil nach Anspruch 1 oder 2, **dadurch gekennzeichnet, dass** der Verschlusspfropfen (23) an der den Druckraum (21) begrenzenden Stirnseite (20) des Steuerkolbens (19) angeordnet ist.

4. Wegeventil nach einem der Ansprüche 1 bis 3, **dadurch gekennzeichnet, dass** auf der das Federelement (18) aufweisenden Seite des Steuerkolbens (19) ein Entlastungskanal (28) angeordnet ist.

5. Wegeventil nach einem der Ansprüche 1 bis 4, **dadurch gekennzeichnet, dass** das Wegeventil (17) als Mehrwegeventil mit mindestens zwei Strömungskanälen (8', 9') ausgebildet ist, die von dem Steuerkolben (19) zu schließen bzw. zu öffnen sind.

6. Wegeventil nach Anspruch 5, **dadurch gekennzeichnet, dass** mindestens zwei Strömungskanäle (8', 9') in einer gemeinsamen Öffnungsstellung des Steuerkolbens (19) geöffnet sind.

7. Wegeventil nach einem der Ansprüche 1 bis 6, **dadurch gekennzeichnet, dass** das Federelement an einem fest im Ventilgehäuse angeordneten Stopfen (24) abgestützt ist.

8. Wegeventil nach Anspruch 7, **dadurch gekennzeichnet, dass** am Stopfen (24) ein Dichtring (27) angeordnet ist, der in der Schließposition zwischen dem Stopfen (24) und dem Steuerkolben (19) liegt.

9. Scheibenreinigungsvorrichtung mit einem Wegeventil (17) nach einem der Ansprüche 1 bis 8, **dadurch gekennzeichnet, dass** eine elektrisch betätigbare Pumpe (2) zur Förderung des Fluids vorgesehen ist.

10. Scheibenreinigungsvorrichtung nach Anspruch 9, **dadurch gekennzeichnet, dass** verschiedene Strömungskanäle (8', 9') im Wegeventil über die Drehrichtung der Pumpe (2) ansteuerbar sind.

11. Scheibenreinigungsvorrichtung nach Anspruch 9 oder 10, **dadurch gekennzeichnet, dass** das von der Pumpe (2) geförderte Fluid sowohl dem Druckraum (21) im Ventilgehäuse als auch dem mindestens einen Strömungskanal (8', 9') zuführbar ist.
